# EUROPÄISCHE PATENTSCHRIFT

(11) **EP 1 575 851 B1**
(45) Veröffentlichungstag und Bekanntmachung des Hinweises auf die Patenterteilung: **09.05.2007**
(21) Anmeldenummer: 03773698.0
(22) Anmeldetag: 03.11.2003
(51) Int. Cl.: B65G 1/04

(54) **SYSTEM ZUM DYNAMISCHEN BEREITSTELLEN UND KOMMISSIONIEREN, INSBESONDERE VON PALETTEN UND ANDEREN LAGEREINHEITEN**
SYSTEM FOR DYNAMICALLY PREPARING AND COMMISSIONING ESPECIALLY PALLETS AND OTHER STORAGE UNITS
SYSTEME POUR MISE A DISPOSITION DYNAMIQUE ET PREPARATION EN PARTICULIER DE PALETTES ET D'AUTRES UNITES DE STOCKAGE

(30) Priorität: 01.11.2002 DE 10250964
(43) Veröffentlichungstag der Anmeldung: 21.09.2005
(73) Patentinhaber: KRUSCHE LAGERTECHNIK AG, 85435 Erding (DE)
(72) Erfinder: GUDEHUS, Timm, 22587 Hamburg (DE); LUKAS, Gunther, 92711 Parkstein (DE)
(74) Vertreter: Jehle, Volker Armin
(86) Internationale Anmeldenummer: PCT/EP2003/012257
(87) Internationale Veröffentlichungsnummer: WO 2004/039700

(56) Entgegenhaltungen:
- DE-A- 3 435 679
- PATENT ABSTRACTS OF JAPAN vol. 011, no. 054 (M-563), 19. Februar 1987 (1987-02-19) & JP 61 217404 A (HITACHI LTD), 27. September 1986 (1986-09-27)
- PATENT ABSTRACTS OF JAPAN vol. 1999, no. 01, 29. Januar 1999 (1999-01-29) & JP 10 279007 A (ISHIKAWAJIMA HARIMA HEAVY IND CO LTD), 20. Oktober 1998 (1998-10-20)

## Beschreibung

Die Erfindung betrifft ein System zum dynamischen Bereitstellen von Lagereinheiten mit darin enthaltenen Gütern.

Um bei üblichen Kommissioniersystemen eine im wesentlichen dynamische Bereitstellung zu ermöglichen, werden für die Ein- und Auslagerung von Lagereinheiten mit darin enthaltenen Gütern herkömmlicherweise flurgebundene Regalbediengeräte verwendet, die mit einem im wesentlichen stationären Fördersystem kombiniert werden. Hierbei ist das stationäre Fördersystem an die jeweiligen Bedürfnisse, beispielsweise Transportgutart oder Projekterfordernisse angepasst, so dass unterschiedliche Fördermaßnahmen ergriffen werden können. Beispielsweise können Rollenbahnen, Kettenförderer, Umlenkeinrichtungen oder schienengebundene Verteilerwagen das stationäre Fördersystem bilden.

Da die Leistungsfähigkeit eines Kommissioniersystems wesentlich durch die Transportgrenzleistung der einzelnen Systemkomponenten bestimmt wird, sind die üblichen Kommissioniersysteme, bestehend aus flurgebundenen, fest installierten Regalbediengeräten und stationären Fördersystemen in ihrer Leistung begrenzt, Sie weisen insoweit erhebliche Nachteile hinsichtlich der Flexibilität gegenüber Schwankungen in der Nutzungsauslastung, wie beispielsweise in saisonalen Stoßzeiten (beispielsweise Weihnachtsgeschäft im Versandbereich) oder bei Ausfällen der Einzelsystemkomponenten aufgrund Wartung oder Reparaturen auf.

JP 61 21 7404 beschreibt ein Lagersystem gemäß dem Oberbegriff des Anspruchs 1, welches mehrere Regalreihen, zwischen den Regalreihen angeordnete Trassen zum Verfahren von Regalförderzügen und die Regalreihen und Trassen rechtwinklig kreuzende Durchgänge für Transportvorrichtungen aufweist. Diese Anordnung ermöglicht eine Verkürzung der Dauer von Auslieferungs- und Annahmevorgängen da mehrere Regalförderzüge und Transportvorrichtungen gleichzeitig eingesetzt werden können.

Aufgabe der vorliegenden Erfindung ist es daher, ein System bereitzustellen, mit dem eine hochdynamische Bereitstellung von Lagereinheiten mit darin enthaltenen Gütern ermöglicht wird, so dass Güter zeit- und wegoptimal von einem Lagerbereich zu einer bestimmten Bereitstellstation befördert werden und das System ferner einen hohen Grad an Flexibilität in Bezug auf Schwankungen der Nutzungsauslastung und des Artikelspektrums aufweist.

Diese Aufgabe wird durch das erfindungsgemäße System zum dynamischen Bereitstellen von Lagereinheiten mit darin enthaltenen Gütern mit den Merkmalen gemäß Anspruch 1 gelöst. Vorteilhafte Weiterbildungen der Erfindung sind in den Unteransprüchen 2 bis 22 gekennzeichnet.

Das erfindungsgemäße System zum dynamischen Bereitstellen von Lagereinheiten mit darin enthaltenen Gütern besteht mindestens aus
- einem Lagerbereich mit mindestens zwei durch eine Gasse voneinander getrennten Regalscheiben mit Regalfächern zur Lagerung der Lagereinheiten in den Regalfächern;
- einem flurgebundenen Transportsystem mit mindestens einem Fahrzeug, das so ausgebildet und dazu geeignet ist, um aus den Regalfächern Lagereinheiten zu entnehmen und durch die mindestens eine Gasse zu mindestens einem ersten Bereich innerhalb oder außerhalb des Lagerbereichs zu befördern;
- einem flurfrei arbeitenden Lagerbediensystem mit mindestens einer Verfahreinheit mit Lastaufnahmemittel, das so ausgebildet und dazu geeignet ist, um aus den Regalfächern Lagereinheiten mit Gütern zu entnehmen und diese oberhalb einer Fahrtrasse des mindestens einen Fahrzeugs hängend zu einem zweiten Bereich zu befördern;
- mindestens einer Operationseinheit, die so ausgebildet ist, um zumindest wesentliche Zustandsdaten des mindestens einen Fahrzeugs und der mindestens einen Verfahreinheit mit Lastaufnahmemittel zu erfassen, so dass Kollisionen des mindestens einen Fahrzeugs und der mindestens einen Verfahreinheit mit Lastaufnahmemittel vermieden werden.

Zweckmäßigerweise ist das mindestens eine Fahrzeug als fahrerloses Transportfahrzeug ausgebildet und dazu geeignet, mindestens eine Lagereinheit zu befördern.

Zweckmäßigerweise kann das mindestens eine fahrerlose Transportfahrzeug aus einem Verbund von mehreren Transporteinheiten bestehen, die beispielsweise über mechanische Mittel oder über nichtmechanische Mittel, wie beispielsweise opto-elektronische Signale aneinander gekoppelt sind.

Vorteilhafterweise weist das mindestens eine fahrerlose Transportfahrzeug Hubeinrichtungen zum Anheben und Absenken der Lagereinheiten auf.

Vorzugsweise ist die mindestens eine Verfahreinheit mit Lastaufnahmemittel in der mindestens einen Gasse angeordnet.

Das erfindungsgemäße Systems zum dynamischen Bereitstellen von Lagereinheiten mit darin enthaltenen Gütern besteht somit im wesentlichen aus vier Teilsystemen, wobei die als Steuersystem ausgebildete Operationseinheit die Koordination und Abstimmung der einzelnen Teilsysteme untereinander vornimmt.

Neben den Teilsystemen
- Lagerbereich mit Regalen,
- flurgebundenes Transportsystem, beispielsweise FTS-System,
- flurfreies Lagerbediengerät, beispielweise TransFaster®-Technologie wird vorteilhafterweise regelmäßig eine im wesentlichen stationäre Fördertechnik die Peripherie des Systems bilden, wobei die Fördertechnik dazu geeignet ist, die Eingabe, Ausgabe, Kommissionierung und Bereitstellung der einzelnen Güter vorzunehmen.

Eine mögliche Ausgabe besteht beispielsweise darin, eine Montage von Einzelteilen vorzunehmen, oder eine Vielzahl unterschiedlicher Artikel zu einer Kombination zusammenzustellen. Beispielsweise ist es mit dem erfindungsgemäßen System möglich, eine Vielzahl von unterschiedlichen Artikeleinheiten, die jeweils in einer größeren Stückszahl auf einzelnen Palette angeordnet sind, zeitoptimal zu kommissionieren. Ein weiterer Vorteil des erfindungsgemäßen Systems besteht in der Möglichkeit, eine hohe Bereitstellleistung zu erbringen sowie eine hohe Flexibilität in Bezug auf die Anordnung der einzelnen Systemkomponenten. Weiterhin ist es vorteilhaft, daß sowohl das gesamte System als auch die einzelnen Komponenten dem sich ändernden Kundenbedarf entsprechend skalierbar sind.

### 1. Lagerbereich

Der für das erfindungsgemäße System notwendige Lagerbereich besteht aus mindestens zwei durch eine Gasse voneinander getrennten Regalscheiben mit Regalfächern, zur Lagerung der Lagereinheiten.

Mögliche Lagereinheiten sind beispielsweise Paletten, Gitterboxpaletten, Behälter, Langgutkassetten, Tablare oder Systempaletten, in denen unterschiedliche Güter gelagert werden können. Zur Erhöhung der Flexibilität ist es möglich, eine Kombination der unterschiedlichen Lagereinheiten in einem Lagerbereich vorzusehen.

Die Dimensionierung des Lagerbereichs, beispielsweise die Regallänge, die Gassenanzahl, Regalhöhe und Regaltiefe, richtet sich beispielsweise nach den jeweiligen benötigten Lagerkapazitäten, der Artikelanzahl, der Artikelabmessung, der benötigten Bereitstellungsdynamik und/oder dem jeweiligen Gewicht der Artikel bzw. Lagereinheiten.

Um eine besonders effektive Ausnutzung des Lagerbereichs zu erreichen, kann es sinnvoll sein, eine mehrfach tiefe Lagerung hintereinander vorzunehmen, wobei auch diesbezüglich eine Kombination einer Lagerung mit einfacher Tiefe mit Lagerungen mehrfache Tiefe möglich ist.

Um eine zeit- und wegoptimierte Bereitstellung von Lagereinheiten mit darin enthaltenen Gütern zu erzielen, ist es vorteilhaft, die Güter nach Zugriffshäufigkeit in unterschiedliche Prioritätskategorien einzuteilen und entsprechend dieser Kategorisierung eine Einlagerung im Lagerbereich vorzunehmen.

Während besonders gängige Artikel, auf die sehr oft zugegriffen werden muss, beispielsweise als A-Artikel bezeichnet werden können, Artikel, auf die demgegenüber seltener zugegriffen werden muss, als B-Artikel bezeichnet werden, werden Artikel, die sehr selten angefordert werden, die Kategorie C-Artikel bilden. Entsprechend dieser Kategorisierung ist es vorteilhaft, die sogenannten A-Artikel in denjenigen unteren Regalebenen einzulagern, auf die mittels flurgebundenem Transportsystem, beispielsweise einem FTS unmittelbar zugegriffen werden kann.

Bei einem FTS mit Hubeinrichtung, die so ausgebildet ist, dass ein Heben der darauf angeordneten Lagereinheiten bis in die dritte Regalebene erfolgen kann, ist es vorteilhaft, die A-Artikel permanent in den ersten drei unteren Regalebenen einzulagern. Die restlichen Regalfächer der unteren Regalebenen sind zur temporären Bereitstellung der Zugriffseinheiten der B- oder C-Artikel dynamisch nutzbar.

Oberhalb derjenigen Regalebenen, die direkt vom FTS bedient werden können, werden zweckmäßigerweise Lagereinheiten mit A-, B- und C-Artikeln gelagert und erst auf Anforderung, d.h. Signal der als Steuerungssystem ausgebildeten Operationseinheit von dem flurfrei arbeitenden Lagerbediengerät, beispielsweise einem TransFaster® umgelagert, d.h. von den mittels FTS nicht zugänglichen Lagerebenen in Lagerebenen, die über ein FTS zugänglich sind, befördert.

Neben dieser Grobeinteilung zwischen FTS-zugänglichen und nicht FTS-zugänglichen Lagerebenen ist es weiterhin möglich, eine Einteilung innerhalb der FTS-zugänglichen Regalebenen vorzunehmen, wobei hierarchisch nach Zugriffshäufigkeit unterschieden werden kann.

Bei einem FTS mit Hubeinrichtung, die so ausgebildet ist, um die unteren drei Regalebenen bedienen zu können, würden dennoch die A-Artikel bevorzugt in der untersten Regalebene eingelagert werden, da die Zugriffszeit in diese Regalebene kürzer ist, als die Zugriffszeit in der darüberliegenden Regalebene, da zumindest eine Vertikalbewegung der Hubeinrichtung nach der Fahrbewegung des FTS stattfinden muss.

Bei der Wahl der Regalfächer für A-Artikel kann es vorteilhaft sein, diese in der untersten Regalebene jeweils nahe der Mitte eines Regalabschnitts vorzusehen, so dass das Ein-, Aus- und Umlagern durch das flurfrei arbeitende Lagerbediengerät, beispielsweise einem TransFaster® zeit- und wegoptimiert ist. Es kann auch vorteilhaft sein, eine Vielzahl von Übergabeplätzen über einen Regalabschnitt zu verteilen.

### 2. Flurgebundenes Transportsystem

Das erfindungsgemäße System verwendet ein flurgebundenes Transportsystem mit mindestens einem Fahrzeug, das so ausgebildet und dazu geeignet ist, um aus den Regalfächern Lagereinheiten zu entnehmen und durch die mindestens eine Gasse zu mindestens einem ersten Bereich innerhalb oder außerhalb des Lagerbereichs zu befördern und vorzugsweise gegebenenfalls auch wieder zurück zu befördern.

Das flurgebundene Transportsystem, das beispielsweise als fahrerloses Transportsystem (FTS) ausgebildet sein kann, übernimmt den Transport der Lagereinheiten, wobei eine Steuerung der einzelnen Fahrzeuge über unterschiedliche, jedoch dem Durchschnittsfachmann bekannte Systeme erfolgen kann.

Das FTS-Spurnetz wird vorteilhafterweise so gelegt, dass die Fahrtrassen nicht nur entlang der Regalgassen verlaufen sondern auch die Regalscheiben und -gassen vorzugsweise senkrecht gequert werden und so einzelne Blöcke im Lagerbereich entstehen, die so bemessen sind, dass bei der Kombination der flurgebundenen Transportsysteme mit flurfrei arbeitenden Lagerbediensystemen ein zeit- und wegoptimiertes Bereitstellen von Lagereinheiten mit darin enthaltenen Gütern erfolgen kann.

Mit dem System zum Bereitstellen von Lagereinheiten mit darin enthaltenen Gütern können unter anderem die Vorteile erzielt werden:
- Die flurgebundenen Transportsysteme, beispielsweise die FTS-Fahrzeuge sind in der Lage, in den unteren Regalebenen bereitgestellte Zugriffseinheiten der Kategorie A-Artikel mit geringem Zeit- und auch geringem Kostenaufwand ein- bzw. auszulagern und bereitzustellen.
- Die flurfrei arbeitenden Lagerbediengeräte, beispielsweise TransFaster® sind in der Lage, den Nachschub von den Regalebenen, die oberhalb der Erreichbarkeit der FTS eingelagert sind, in den Aktionsbereich der FTS-Fahrzeuge umzulagern, so dass auch die dort befindlichen Lagereinheiten für die FTS-Fahrzeuge direkt zugänglich sind und zur Bereitstellung entnommen werden können.
- Die TransFaster® übernehmen im wesentlichen den lediglich Nachschub der A-Artikel und die Bereitstellung der B- und C- Artikel.

Vorteilhafterweise ist das FTS, sofern es mit einer Hubeinrichtung ausgestattet ist, mit Mitteln versehen, die so ausgebildet und angeordnet sind, dass bei maximaler Hubleistung ein zuverlässiges Abstützen des FTS in der Gasse stattfindet, um während der Horizontalbewegung der Lagereinheit mit darin enthaltenen Gütern ein sicheres Aus- und Einlagern in die entsprechenden Regalfächern zu gewährleisten. Eine horizontale Transporteinrichtung kann beispielsweise über Teleskopgabeln verwirklicht werden, die auf einer Hubplattform angeordnet bzw. integriert sind, welche auf dem Lastaufnahmemittel angeordnet ist

### 3. Flurfrei arbeitendes Lagerbediensystem

Das flurfrei arbeitende Lagerbediensystem, das aus mindestens einer Verfahreinheit mit Lastaufnahmemittel besteht, ist so ausgebildet, dass es aus den Regalfächern Lagereinheiten mit Gütern entnehmen kann und diese oberhalb einer Fahrtrasse des mindestens einen Fahrzeugs hängend zu einem zweiten Bereich befördert.

Hierzu verläuft die Verfahreinheit auf mindestens einem schienenartigen Führungsmitteln, die in den Gassen zwischen den Regalscheiben vorzugsweise auf einer der oberen Fachebenen an der Regalkonstruktion angeordnet sind. Das Lastaufnahmemittel ist zweckmäßigerweise mit einem Verbindungsmittel, beispielsweise über Seilelemente, mit der Verfahreinheit verbunden, wobei ein entsprechendes Seilwindensystem auf der horizontal auf den schienenartigen Führungsmitteln bewegbaren Verfahreinheit angeordnet ist, um eine vertikale Bewegung des Lastaufnahmemittels gegenüber der Verfahreinheit bedarfsentsprechend zu veranlassen.

Die Verfahreinheit mit Lastaufnahmemittel ist so ausgebildet, dass eine vertikale Bewegung des Lastaufnahmemittels über das Windensystem während einer horizontalen Bewegung der Verfahreinheit möglich ist

Das Lastaufnahmemittel ist so ausgebildet, um Lagereinheiten darauf stehend oder darunter hängend anzuordnen. Ferner weist das Lastaufnahmemittel Einrichtungen auf, um eine damit transportierte Lagereinheit horizontal in ein Regalfach zu befördern, bzw. auszulagern. Eine derartige horizontale Transporteinrichtung kann beispielsweise über Teleskopgabeln verwirklicht werden, die auf einer Hubplattform angeordnet bzw. integriert sind, welche auf dem Lastaufnahmemittel angeordnet ist

Wird eine Lagereinheit unter dem Lastaufnahmemittel hängend angeordnet, so ist ebenfalls eine Vorrichtung für eine Horizontalbewegung mit einer entsprechenden Hubeinrichtung notwendig, um eine Horizontalbewegung in ein entsprechendes Regalfach bzw. aus einem Regalfach vorzunehmen.

Entsprechend der Fixiereinrichtung an der Hubeinrichtung des flurgebundenen Transportsystems weist das Lastaufnahmemittel zweckmäßigerweise eine Fixiereinrichtung auf, die über mechanische Mittel zur formschlüssigen oder kraftschlüssigen Verbindung des Lastaufnahmemittels mit den beiden angrenzenden Regalscheiben verfügt.

Um einen zeitoptimierten Transport von Lagereinheiten mit darin enthaltenen Gütern mit dem flurfrei arbeitenden Lagerbediengerät, beispielsweise einem TransFaster®, ausführen zu können, ist es vorteilhaft, eine im wesentlichen pendelfreie Beförderung der Lagereinheiten zu gewährleisten. Hierzu ist jedes flurfrei arbeitende Lagerbediengerät mit einer entsprechenden Systemsteuerung ausgestattet, die es erlaubt, das Lastaufnahmemittel mit Lagereinheit mit darin enthaltenem Gut mittels einer speziellen Bahnregelung auf einem zeitoptimierten Weg zwischen den Bereitstellplätzen und den Lagerfächern zu transportieren.

Vorteilhafterweise können die einzelnen flurfrei arbeitenden Lagerbediengeräte, beispielsweise TransFaster® auf unterschiedlichen Ebenen oder auf einer Ebene angeordnet sein und somit die Bereitstellleistung oder Flexibilität innerhalb einer Gasse wesentlich erhöhen.

Bei einer weiteren bevorzugten Ausführungsform des erfindungsgemäßen Systems wird eine Gangumsetzeinrichtung dazu verwendet, um ein flurfrei arbeitendes Lagerbediengerät in mehreren Gassen einsetzen zu können. Dies kann beispielsweise erforderlich sein, wenn in einem bestimmten Lagerbereich Lagereinheiten mit darin enthaltenen Gütern gelagert werden, auf die sehr selten zugegriffen werden muss oder in Lagerbereichen, die keine besondere Bereitstellungsleistung erbringen müssen.

Bei der Verwendung einer Gangumsetzeinrichtung wird beispielsweise der TransFaster® von einer Gasse in einer anderen, parallelen Gasse umgesetzt, so dass der Auslastungsgrad für das flurfrei arbeitende Lagerbediengerät wesentlich erhöht werden kann.

Durch die Kombination der unterschiedlichen Flexibilitätsmaßnahmen, wie beispielsweise Gangumsetzeinrichtung, Modifikation des Lastaufnahmemittels für mehrere Lagereinheiten, die Verwendung von mehreren TransFastern® in einer Gasse lässt sich auch nach Bereitstellen des Systems eine Anpassung an unterschiedliche Gesamtleistungen vornehmen.

### 4. Operationseinheit

Die als Systemsteuerung ausgebildete Operationseinheit des Systems ist vorteilhafterweise dezentralisiert hierarchisch aufgebaut. Hierzu werden die Einzelfunktionen der Systemelemente auf der Prozesssteuerungsebene von Einzel- und Gruppensteuerungen des flurgebundenen Transportsystems, des flurfrei arbeitenden Lagerbediensystems und gegebenenfalls von der stationären Fördertechnik gesteuert

Derartige Einzelfunktionen können beispielsweise die Fahrgeschwindigkeit der FTS-Fahrzeuge oder die Kollisionsverhinderung einzelner FTS-Fahrzeuge untereinander sein. Eine für den TransFaster® wesentliche Einzelfunktion ist beispielsweise die Pendelunterdrückung während des horizontalen Transports der Verfahreinheit.

Die Funktion der Systemelemente und der Teilsysteme werden von einem Lagerverwaltungs- und Betriebssteuerungssystem (LBS) ausgelöst, koordiniert und kontrolliert. Bei einer besonders bevorzugten Ausführungsform des erfindungsgemäßen Systems kann eine Lagerverwaltungs- und Betriebssteuerungssystem Aufträge aus einem übergeordneten Geschäftsverwaltungssystem, beispielsweise einem SAP R/3 erhalten und gegebenenfalls auch die Ausführung einzelner Aufträge zurückmelden.

Das Lagerverwaltungs- und Betriebssteuerungssystem kann folgende Aufgaben und Funktionen übernehmen:
- Auftragsdisposition
- Lagerplatzverwaltung
- FTS-Systemsteuerung
- Fördertechnikkoordination
- Arbeitsplatzsteuerung
- Leistungserfassung.

Ein bevorzugtes Ausführungsbeispiel des erfindungsgemäßen Systems wird anhand der nachfolgenden Zeichnungen näher erläutert. Es zeigen:
- Figur 1: eine seitliche Schnittdarstellung auf einen Lagerbereich des erfindungsgemäßen Systems;
- Figur 2: eine Schnittdarstellung des Lagerbereichs gemäß Figur 1;
- Figur 3: eine Detailansicht eines Lagerbereichs des erfindungsgemäßen Systems mit Blicktichtung entlang einer Regalgasse;
- Figur 4: eine schematische Darstellung der Ein-, Um- und Auslagerung von Lagereinheiten;
- Figur 5: eine schematische Darstellung eines Ausschnitts des Lagerbereichs des erfindungsgemäßen Systems;
- Figur 6: eine Draufsicht und Seitenansicht eines FTS mit darauf angeordneter Lagereinheit.

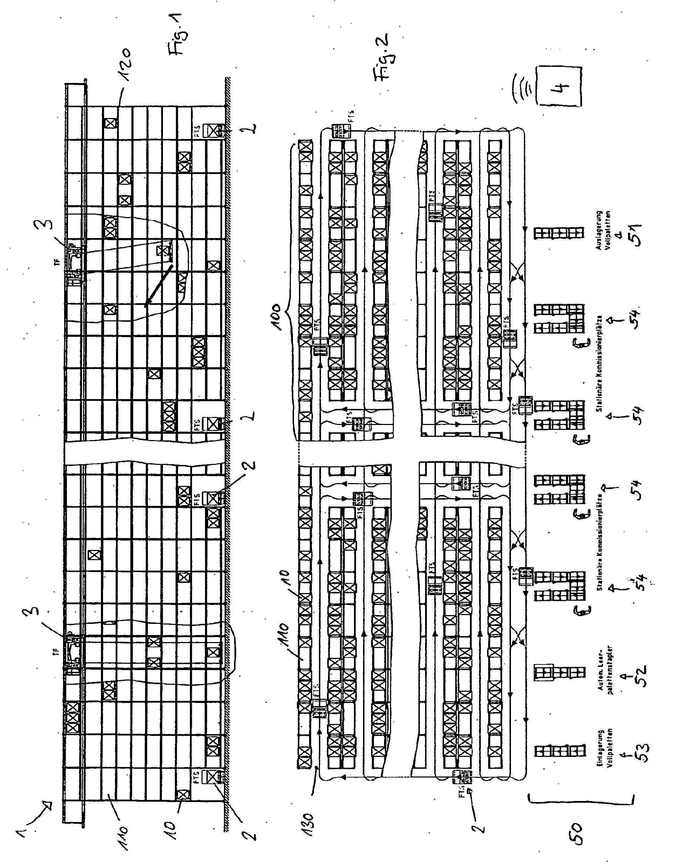

Figur 1 zeigt eine Seitenansicht eines Lagerbereichs 1 eines erfindungsgemäßen Systems mit vier fahrerlosen Transportfahrzeugen, FTS 2, die am Boden des Lagerbereichs 1 auf entsprechenden Spuren fahrbar angeordnet sind. Im Lagerbereich 1 sind eine Vielzahl von Lagereinheiten 120 mit darauf befindlichen Gütern 10 angeordnet, sowie zwei flurfrei arbeitende Lagerbediengeräte 3 vorgesehen, die so ausgebildet sind, dass alle Lagereinheiten 120 in den Regalfächern 110 bedient werden können.

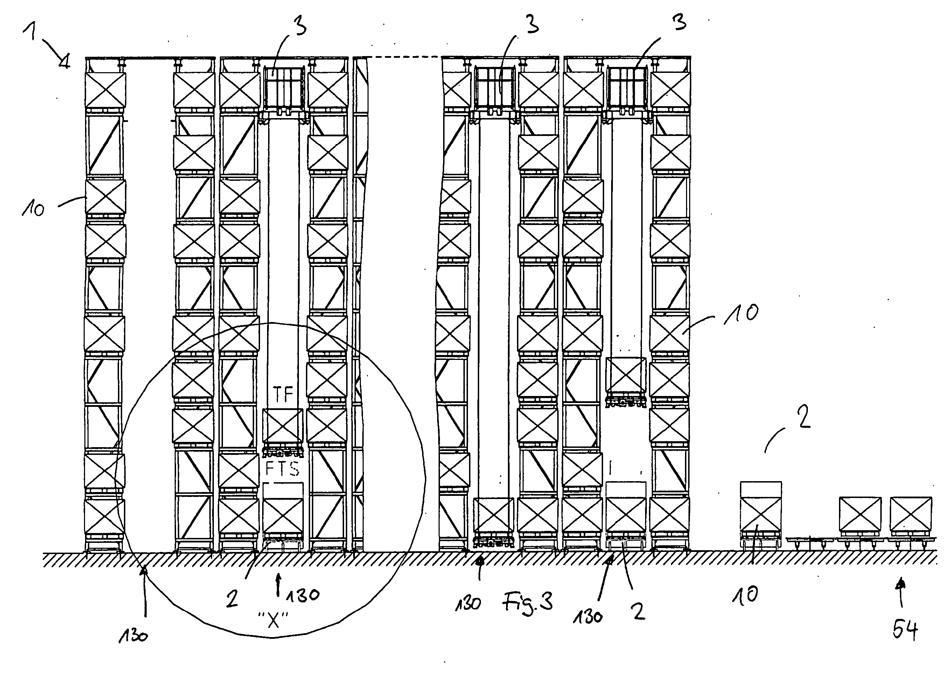

Figur 2 zeigt eine Draufsicht auf den Lagerbereich 1, der aus einer Vielzahl von Regalscheiben 100 gebildet wird, die über Gassen 130 im wesentlichen parallel zueinander angeordnet sind. Die Regalscheiben 100 unterteilen sich ihrerseits in eine Vielzahl von Regalfächern 110, in die Lagereinheiten 120 mit Gütern 10 eingebracht werden können, wobei die Lagereinheiten 120 unterschiedliche Dimensionen aufweisen können.

Gemäß Figur 2 sind alle Regalfächer 110 so dimensioniert, dass drei der Lagereinheiten 120 in ein Regalfach 110 angeordnet werden können. Ebenso ist es denkbar, dass ein Lagerbereich 1 aus unterschiedlichen Regalscheiben 100 bestehen kann, die Regalfächer 110 unterschiedlicher Größe aufweisen, so dass auch die Lagerhaltung und Bereitstellung unterschiedlicher Lagereinheiten möglich ist.

Es ist daher ebenso möglich, die flurgebundenen Transportsysteme bzw. die flurfrei arbeitenden Lagerbediensysteme ebenfalls entsprechend der Dimension der Lagereinheiten unterschiedlich auszulegen und zu dimensionieren, so dass auch bei der Montage oder Kommissionierung von komplexen Erzeugnissen, wie beispielsweise Kraftfahrzeugen oder Haushaltsgeräten voluminöse Güter 10 in entsprechenden Lagereinheiten 120 gelagert werden und Güter 10 kleinerer Größe in entsprechenden Abschnitten des Lagerbereichs 1 gelagert werden, die auf die Dimension dieser Artikel entsprechend angepasst sind.

Die FTS 2 entnehmen gemäß Auftrag eine Lagereinheit 120 und transportieren diese zeit- und wegoptimiert in einen ersten Bereich 50, um dort die Lagereinheit 120 bereitzustellen. Diese Bereitstellstation kann beispielsweise als Kommissionierplatz, in einem Regalfach, als Ver- und Entsorgungsbereich einer Fertigungsstelle, als Zwischenpuffer, als Lager oder als eine Kombination der vorgenannten Varianten ausgebildet sein.

Gemäß Figur 2 ist der erste Bereich 50 als Zwischenpuffer zur Einlagerung von Vollpaletten; als automatischer Leerpalettenstapler 52; als stationäre Kommissionierplätze 54 oder als Auslagerung für Vollpaletten 51 ausgebildet Wie in Figur 2 dargestellt, wird das Spurnetz der FTS 2 so ausgelegt, dass jedes FTS 2 zu allen ersten Bereichen 50 bewegt werden kann, wobei es zur Optimierung sinnvoll sein kann, parallel verlaufende Strecken vorzusehen, wenn diese beispielsweise einer hohen Nutzung unterliegen, wie dies insbesondere in unmittelbarer Nähe der stationären Kommissionierplätze 54 sein kann.

Über die als Systemsteuerung ausgebildete Operationseinheit 4 sind beispielsweise alle Zustandsdaten der FTS 2 bekannt und werden von dieser koordiniert und/oder gesteuert. Zweckmäßigerweise ist die als Systemsteuerung ausgebildete Operationseinheit 4 mit weiteren Systemen, beispielsweise Systemen zur Lagerdisposition, Buchhaltung, Revision oder zur Montageautomatisierung operativ verbunden.

Entsprechend den jeweiligen Projektanforderungen transportiert das FTS 2 eine Lagereinheit 120, beispielsweise zu einem stationären Kommissionierplatz 54, an dem mittels Fördereinrichtung Handlungen vorgenommen werden können, um das auf der Lagereinheit 120 befindliche Gut 10 weiteren Maßnahmen zu unterziehen. Eine derartige Maßnahme kann beispielsweise in der Zusammenstellung von komplexeren Systemen, wie beispielsweise das Zusammenstellen von Versandartikeln oder ähnlichem bestehen, so dass das FTS 2 die Lagereinheit 120 nach Entnahme eines darin enthaltenen Gutes 10, beispielsweise zurück in ein Regalfach befördert. Entsprechend der jeweiligen Kategorisierung des entnommenen Guts 10 wird die jeweilige Regalfachwahl getroffen.

Um eine möglichst zeit- und wegoptimierte Bereitstellung zu ermöglichen, kann es beispielsweise möglich sein, die als A-Artikel deklarierten Güter möglichst nahe an den stationären Kommissionierplätzen 54 anzuordnen, bei C-Artikeln kann es hingegen sinnvoll sein, diese in Regalfächern 110 einzulagern, die räumlich weiter von den stationären Kommissionierplätzen 54 entfernt sind. Ebenfalls kann es sinnvoll sein, eine chaotische Einlagerungsstrategie vorzunehmen, um eine gleichmäßige Auslastung der Systemkomponenten zu erzielen.

Wird beispielsweise das letzte Gut 10 auf einer Lagereinheit 120 an einem der stationären Kommissionierplätze 54 entnommen, so wird das FTS 2 die leere Palette beispielsweise dem automatischen Leerpalettenstapler 52 übergeben.

Wird beispielsweise ein Gut 10 für keine zukünftigen Aufträge mehr erwünscht oder eine komplette Lagereinheit 120 angefordert, so wird das FTS 2 die entsprechenden Lagereinheiten 120 in den ersten Bereich 50 übergeben, der als Auslagerung für Vollpaletten 51 ausgebildet ist.

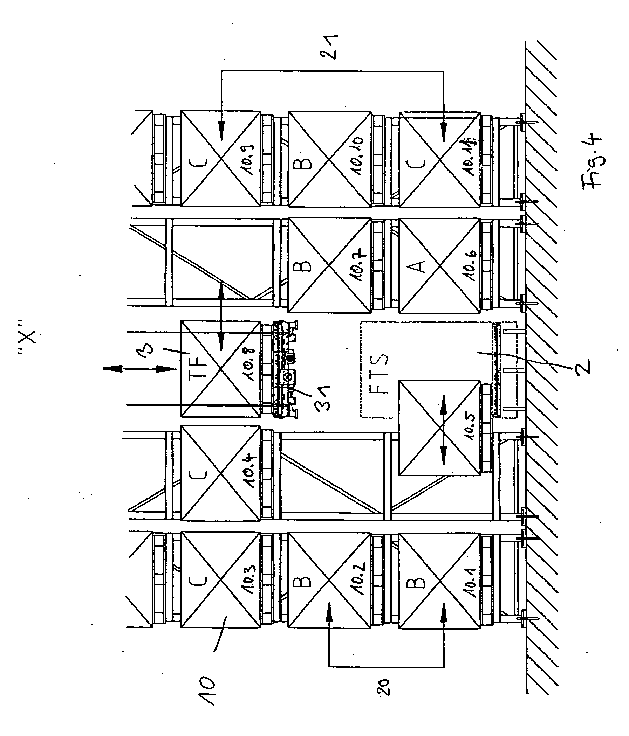

Figur 3 zeigt ein Zusammenspiel des FTS 2 und TransFaster® 3 in den Regalgassen 130. Während der TransFaster® 3 so ausgebildet ist, alle Regalebenen in einer Gasse 130 erreichen zu können, ist der FTS 2 lediglich in der Lage, in eine der unteren Regalebenen Lagereinheiten 120 ein-, aus- oder umzulagern. Gemäß Figur 3 transportiert ein FTS 2 eine Lagereinheit 120 zu einem stationären Kommissionierplatz 54 und wird dort die gesamte Lagereinheit 120 übergeben.

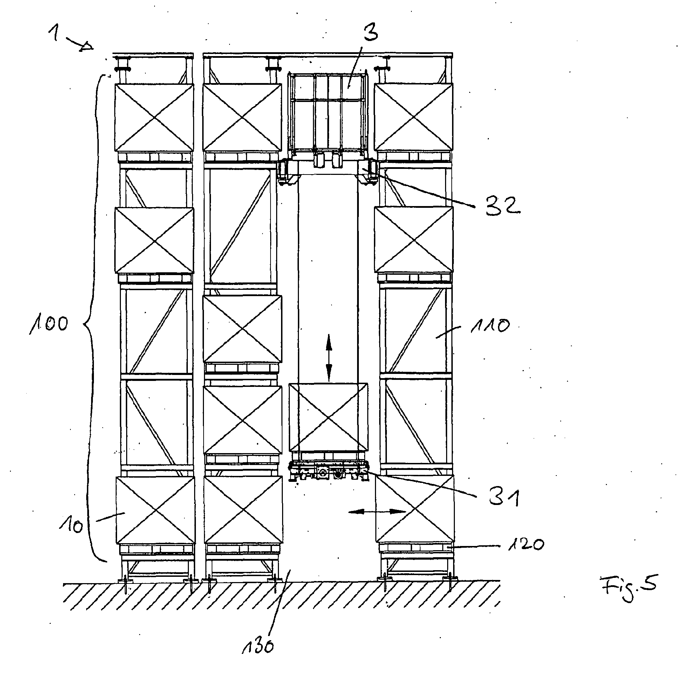

Figur 4 zeigt eine Detailansicht der Darstellung von Figur 3, wobei das Konzept zur Zeit- und Wegoptimierung ersichtlich ist. Das FTS 2 ist lediglich in der Lage, die unterste Regalebene zu bedienen, so dass die Lagereinheiten mit den Gütern 10.1, 10.5, 10.6 und 10.11 unmittelbar von einem FTS 2 ein-, aus- oder umgelagert werden können. Damit das FTS 2 das Gut 10.2 auslagern kann, muß dieses von einem TransFaster® gemäß Pfeil 20 von der gegenwärtigen Regalebene in die unterste Regalebene umgelagert werden.

Zum Ein-, Aus- und Umlagern weist das FTS 2 Vorrichtungen auf, die eine Horizontalbewegung, beispielsweise der Lagereinheit mit dem Gut 10.5 erlauben. Die in den höheren, von einem FTS 2 nicht erreichbaren Regalebenen angeordneten Lagereinheiten mit B- und C-Artikeln Güter 10.2, 10.3, 10.4, 10.7, 10.10 und 10.9 müssen entsprechend der Systemsteuerung von einem TransFaster® 3 in entsprechende Regalfächern 110 in der untersten Regalebene umgelagert werden, die von einem FTS 2 erreicht werden können. Gemäß Figur 4 wird dies durch Pfeil 21 dargestellt, mit dem eine Umlagerung des Guts 10.9 in die unterste Regalebene symbolisiert wird.

Die Ein-, Aus- oder Umlagerungsbewegung eines TransFaster® 3 wird anhand des Guts 10.8, das auf einem Lastaufnahmemittel 31 angeordnet ist, dargestellt.

Figur 5 zeigt einen schematischen Querschnitt durch eine Regalgasse 130. Ferner zeigt Figur 5 eine Regalscheibe 100 und deren Unterteilung in Regalfächer 110, sowie die Anordnung der Lagereinheiten 120 auf die jeweils Güter 10 angeordnet sind. Zur Veranschaulichung des Aktionsradiuses eines TransFaster® 3 mit Verfahreinrichtung 32 und Lastaufnahmemittel 31 ist dieses ebenfalls in Figur 5 dargestellt, wobei die Pfeilangaben einige mögliche Transportrichtungen wiedergeben.

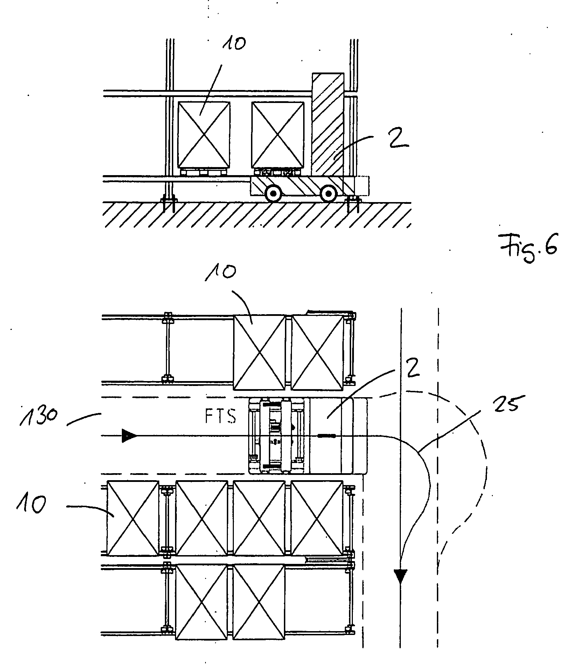

Figur 6 zeigt eine schematische Drauf- und Seitenansicht eines FTS 2 in einer Regalgasse 130, sowie das erforderliche Spurnetz 25, das dazu geeignet ist, jedes FTS 2 flurgebunden durch den Lagerbereich 1 zu leiten.

Nachfolgend ist eine bevorzugte Verfahrensvariante mit Verweis auf Figur 4 näher erläutert.

Wird beispielsweise das Gut 10.8 über die als Systemsteuerung ausgebildete Operationseinheit 4, das vorteilhafterweise ein Lagerverwaltungs- und Betriebssteuerungssystem umfaßt, angefordert, um zu einem stationären Kommissionierplatz 54 transportiert zu werden, wird der nächstliegende TransFaster® 3 aktiviert, um das in der dritten Regalebene befindliche Gut 10.8 in eine Regalebene umzulagern, um dort von einem FTS 2 aufgenommen werden zu können, welches anschließend zu dem entsprechenden stationären Kommissionierplatz 54 fährt.

Da es bei einer derartigen Umlagerung innerhalb einer Gasse zu potentiellen Kollisionen zwischen einem Lastaufnahmemittel 31 und einem FTS 2 kommen kann, werden die Bewegungen der Verfahreinrichtungen 32 und Lastaufnahmemittel 31 über die Operationseinheit 4 koordiniert bisweilen auch gesteuert. Um eine zuverlässige Positionsbestimmung der jeweiligen Fahrzeuge und TransFaster®, sowie der daran hängenden Lastaufnahmemittel 31 gewährleisten zu können, kann es beispielsweise vorteilhaft sein, unterschiedliche Sensorebenen in dem Lagerbereich 1 vorzusehen, die sowohl kumulativ, als auch alternativ miteinander verwendet werden können. Eine mögliche Positionserfassung kann beispielsweise durch optoelektronische Maßnahmen oder Wegmesssysteme erfolgen.

## Patentansprüche

1. System zum dynamischen Bereitstellen von Lagereinheiten (120) mit darin enthaltenen Gütern (10) mindestens bestehend aus:
- einem Lagerbereich (1) mit mindestens zwei durch eine Gasse (130) voneinander getrennten Regalscheiben (100) mit Regalfächern (110) zur Lagerung der Lagereinheiten (120) in den Regalfächern (110)
- einem flurgebundenen Transportsystem mit mindestens einem Fahrzeug (2), das so ausgebildet und dazu geeignet ist, um aus den Regalfächern (110) Lagereinheiten (120) zu entnehmen und durch die mindestens eine Gasse (130) zu mindestens einem ersten Bereich (50) innerhalb oder außerhalb des Lagerbereichs (1) zu befördern;
- ein Lagerbediensystem (3) mit mindestens einer Verfahreinheit (31) mit Lastaufnahmemittel (32), das so ausgebildet und dazu geeignet ist, um aus den Regalfächern (110) Lagereinheiten (120) mit Gütern (10) zu entnehmen und diese oberhalb einer Fahrtrasse des mindestens einen Fahrzeugs (2) hängend zu einem zweiten Bereich zu befördern;
**dadurch gekennzeichnet, daß** das Lagerbediensystem (3) flurfrei arbeitet und daß das System
mindestens eine Operationseinheit (4) aufweist, die so ausgebildet ist, um zumindest wesentliche Zustandsdaten des mindestens einen Fahrzeugs (2) und der mindestens einen Verfahreinheit (31) mit Lastaufnahmemittel (32) zu erfassen, so daß Kollisionen des mindestens einen Fahrzeugs (2) und der mindestens einen Verfahreinheiten (31) mit Lastaufnahmemittel (32) vermieden werden.

2. System nach Anspruch 1, wobei das mindestens eine Fahrzeug (2) ein fahrerloses Transportfahrzeug ist.

3. System nach Anspruch 2, wobei das mindestens eine fahrerlose Transportfahrzeuge zum Befördern zumindest einer Lagereinheit (120) ausgebildet ist.

4. System nach Anspruch 3, wobei die Transporteinheiten fahrerlose Transportfahrzeuge oder Schleppzüge für eine oder mehrere Lagereinheiten (120) sind.

5. System nach einem der Ansprüche 2 bis 4, wobei das mindestens eine fahrerlose Transportfahrzeug Hubeinrichtungen zum Anheben und Absenken der Lagereinheiten (120) aufweist.

6. System nach Anspruch 1, wobei die Verfahreinheit (31) mit Lastaufnahmemittel (32) in der mindestens einen Gasse (130) angeordnet ist.

7. System nach Anspruch 6, wobei die Verfahreinheit (31) auf schienenartigen Führungsmittel bewegbar ausgebildet ist.

8. System nach einem der Ansprüche 6 oder 7, wobei das Lastaufnahmemittel (32) über Verbindungsmittel mit der Verfahreinheit (31) verbunden ist.

9. System nach einem der Ansprüche 6, 7 oder 8, wobei das Lastaufnahmemittel (32) so ausgebildet ist, um Lagereinheiten (120) darauf stehend anzuordnen.

10. System nach einem der Ansprüche 6, 7 oder 8, wobei das Lastaufnahmemittel (32) so ausgebildet ist, um Lagereinheiten (120) darunter hängend anzuordnen.

11. System nach Anspruch 1, wobei der erste Bereich innerhalb des Lagerbereichs (1) eine Bereitstellstation ist, die in einem Regalfach (110) ausgebildet ist.

12. System nach Anspruch 1 wobei der erste Bereich (50) außerhalb des Lagerbereichs (1) eine Bereitstellstation ist, die als Kommissionierplatz (54) ausgebildet ist.

13. System nach Anspruch 1, wobei der erste Bereich (50) außerhalb des Lagerbereichs
(1) eine Bereitstellstation ist, die als Ver- und Entsorgungsbereich einer Fertigungsstelle ausgebildet ist.

14. System nach Anspruch 1, wobei der erste Bereich (50) außerhalb des Lagerbereichs (1) eine Bereitstellstation ist, die als Zwischenpuffer geeignet ist.

15. System nach Anspruch 1, wobei der erste Bereich (50) außerhalb des Lagerbereichs (1) eine Bereitstellstation ist, die als Lager geeignet ist.

16. System nach Anspruch 1, wobei der zweite Bereich innerhalb des Lagerbereichs (1) eine Bereitstellstation ist, die in einem Regalfach (110) ausgebildet und als Kommissionierplatz geeignet ist.

17. System nach Anspruch 1, wobei der zweite Bereich innerhalb des Lagerbereichs (1) eine Bereitstellstation ist, die in einem Regalfach (110) ausgebildet und als Ver- und Entsorgungsbereich einer Fertigungsstelle geeignet ist.

18. System nach Anspruch 1, wobei der zweite Bereich innerhalb des Lagerbereichs (1) eine Bereitstellstation ist, die in einem Regalfach (110) ausgebildet und als Zwischenpuffer geeignet ist.

19. System nach Anspruch 1, wobei der zweite Bereich innerhalb des Lagerbereichs (1) eine Bereitstellstation ist, die in einem Regalfach (110) ausgebildet und als Lager geeignet ist.

20. System nach Anspruch 1, wobei als Zustandsdaten zumindest die jeweiligen Bewegungs- und Positionsdaten des mindestens einen Fahrzeugs (2) und der mindestens einen Verfahreinheiten (31) mit Lastaufnahmemittel (32) geeignet sind.

21. System nach Anspruch 1, wobei die mindestens eine Operationseinheit (4) mit dem mindestens einen Fahrzeug (2) und der mindestens einen Verfahreinheiten (31) mit Lastaufnahmemittel (32) zum Datenaustausch verbunden ist.

22. System nach Anspruch 21, wobei der Datenaustausch über elektromagnetische Wellen erfolgt.

## Claims

1. A system for the dynamic providing of storing units (120) with goods (10) contained therein, said system consisting at least of:
- a storage area (1) with at least two rack plates (100) with rack shelves (110) separated from each other by an alley (130), for storing the storing units (120) in said rack shelves (110);
- a floor-bound transport system with at least one vehicle (2) that is designed and suited to take storing units (120) out of said rack shelves (110) and to transport same through said at least one alley (130) to at least one first area (50) inside or outside said storage area (1);
- a store feeding system (3) comprising at least one traversing unit (31) with load receiving means (32) which is designed and suited to take storing units (120) with goods (10) out of said rack shelves (110) and to transport same above a driving track of said at least one vehicle (2) in hanging to a second area;
**characterized in that** said store feeding system (3) works floor-free and that said system comprises at least one operating unit (4) that is designed to collect at least substantial state data of said at least one vehicle (2) and said at least one traversing unit (31) with load receiving means (32), so that collisions of said at least one vehicle (2) and said at least one traversing unit (31) with load receiving means (32) are avoided.

2. The system according to claim 1, wherein said at least one vehicle (2) is a driverless transport vehicle.

3. The system according to claim 2, wherein said at least one driverless transport vehicle is designed to transport at least one storing unit (120).

4. The system according to claim 3, wherein the transport units are driverless transport vehicles or trains of barges for one or a plurality of storing units (120).

5. The system according to any of claims 2 to 4, wherein said at least one driverless transport vehicle comprises lifting means for lifting and lowering said storing units (120).

6. The system according to claim 1, wherein said traversing unit (31) with load receiving means (32) is positioned in said at least one alley (130).

7. The system according to claim 6, wherein said traversing unit (31) is designed to be movable on rail-like guiding means.

8. The system according to any of claims 6 or 7, wherein said load receiving means (32) is connected with said traversing means (31) via connecting means.

9. The system according to any of claims 6, 7, or 8, wherein said load receiving means (32) is designed such that storing units (120) are positioned thereon in standing.

10. The system according to any of claims 6, 7, or 8, wherein said load receiving means (32) is designed such that storing units (120) are positioned therebelow in hanging.

11. The system according to claim 1, wherein said first area inside said storage area (1) is a providing station that is formed in a rack shelf (110).

12. The system according to claim 1, wherein said first area (50) outside said storage area (1) is a providing station that is formed as commissioning place (54).

13. The system according to claim 1, wherein said first area (50) outside said storage area (1) is a providing station that is formed as supply and removal area of a manufacturing spot.

14. The system according to claim 1, wherein said first area (50) outside said storage area (1) is a providing station that is suited as intermediate buffer.

15. The system according to claim 1, wherein said first area (50) outside said storage area (1) is a providing station that is suited as store.

16. The system according to claim 1, wherein said second area inside said storage area (1) is a providing station that is formed in a rack shelf (110) and is suited as commissioning place.

17. The system according to claim 1, wherein said second area inside said storage area (1) is a providing station that is formed in a rack shelf (110) and is suited as supply and removal area of a manufacturing spot.

18. The system according to claim 1, wherein said second area inside said storage area (1) is a providing station that is formed in a rack shelf (110) and is suited as intermediate buffer.

19. The system according to claim 1, wherein said second area inside said storage area (1) is a providing station that is formed in a rack shelf (110) and is suited as store.

20. The system according to claim 1, wherein at least the respective movement and position data of said at least one vehicle (2) and said at least one traversing unit (31) with load receiving unit (32) are suited as state data.

21. The system according to claim 1, wherein said at least one operating unit (4) is connected with said at least one vehicle (2) and said at least one traversing unit (31) with load receiving means (32) for the exchange of data.

22. The system according to claim 21, wherein the exchange of data is performed via electro-magnetic waves.

## Revendications

1. Système pour la mise à disposition dynamique d'unités de stockage (120) contenant des produits (10), consistant au moins en:
- une zone de stockage (1), avec des plateaux de rayonnage (100) séparés par une voie (130), avec des compartiments de rangement (110) pour le rangement d'unités de stockage (120) dans les compartiments de rangement (110)
- un système de transport au sol, avec au moins un véhicule (2), qui est conçu et adapté pour prélever dans les compartiments de rangement (110) des unités de stockage (120) et pour les convoyer à travers au moins un chemin (130), vers au moins une première zone (50) à l'intérieur ou à l'extérieur de la zone de stockage (1) ;
- un système de manutention d'entrepôt (3), avec au moins une unité de déplacement (31) avec des moyens de réception de charge (32), qui est conçu et adapté pour prélever dans les compartiments de rangement (110) des unités de stockage (120) avec des produits (10) et pour les convoyer au dessus d'une route de circulation pour le au moins un véhicule (2), par voie suspendue vers une deuxième zone ;
**caractérisé en ce que** le système de manutention d'entrepôt (3) fonctionne en version suspendue et **en ce que** le système comporte au moins une unité opérationnelle (4) qui est conçue pour enregistrer au moins des données d'état essentielles du au moins un véhicule (2) et de la au moins une unité de déplacement (31) avec des moyens de réception de charges (32), pour éviter des collisions du au moins un véhicule (2) et de la au moins une unité de déplacement (31) avec des moyens de réception de charges(32).

2. Système selon la revendication 1, au moins un véhicule (2) étant un véhicule sans conducteur.

3. Système selon la revendication 2, le au moins un véhicule de transport sans conducteur étant conçu pour convoyer au moins une unité de stockage (120).

4. Système selon la revendication 3, les unités de transport étant des véhicules de transport ou des ensembles articulés sans conducteur, pour une ou pour plusieurs unités de stockage (120).

5. Système selon l'une quelconque des revendications 2 à 4, le au moins un véhicule de transport sans conducteur comportant des dispositifs de levage, pour lever ou pour abaisser les unités de stockage (120).

6. Système selon la revendication 1, l'unité de déplacement (31) avec moyen de réception de charges (32) étant disposée dans le au moins un chemin (130).

7. Système selon la revendication 6, l'unité de déplacement (31) étant conçue pour être mobile sur des moyens de guidage du type de rails.

8. Système selon l'une quelconque des revendications 6 ou 7, le moyen de réception de charge (32) étant relié par l'intermédiaire de moyens de liaison avec l'unité de déplacement (31).

9. Système selon l'une quelconque des revendications 6, 7 ou 8, le moyen de réception de charges (32) étant conçu pour placer des unités de stockage (120) debout sur ce dernier.

10. Système selon l'une quelconque des revendications 6, 7 ou 8, le moyen de réception de charges (32) étant conçu pour placer des unités de stockage (120) accrochées sous ce dernier.

11. Système selon la revendication 1, la première zone à l'intérieur de la zone de stockage (1) étant un poste de préparation, qui est conçu dans un compartiment de rangement (110).

12. Système selon la revendication 1, la première zone (50) à l'extérieur de la zone de stockage (1) étant un poste de préparation, qui est conçu en tant que place de préparation de commandes (54).

13. Système selon la revendication 1, la première zone (50) à l'extérieur de la zone de stockage (1) étant un poste de préparation, qui est conçu en tant que zone d'alimentation et d'évacuation d'un poste de production.

14. Système selon la revendication 1, la première zone (50) à l'extérieur de la zone de stockage (1) étant un poste de mise à disposition, qui est adapté pour être une zone de stockage intermédiaire.

15. Système selon la revendication 1, la première zone (50) à l'extérieur de la zone de stockage (1) étant un poste de mise à disposition, qui est adapté pour être un entrepôt.

16. Système selon la revendication 1, la deuxième zone à l'intérieur de la zone de stockage (1) étant un poste de mise à disposition, qui est conçu dans un compartiment de rangement (110) et qui est adapté en tant que place de préparation de commandes.

17. Système selon la revendication 1, la deuxième zone à l'intérieur de la zone de stockage (1) étant un poste de mise à disposition, qui est conçu dans un compartiment de rangement (110) et qui est adapté en tant que zone d'alimentation et d'évacuation d'un poste de production.

18. Système selon la revendication 1, la deuxième zone à l'intérieur de la zone de stockage (1) étant un poste de mise à disposition, qui est conçu dans un compartiment de rangement (110) et qui est adapté pour être une zone de stockage intermédiaire.

19. Système selon la revendication 1, la deuxième zone à l'intérieur de la zone de stockage (1) étant un poste de mise à disposition, qui est conçu dans un compartiment de rangement (110) et qui est adapté pour être un entrepôt.

20. Système selon la revendication 1, au moins les données de déplacement et de position concernées du au moins un véhicule (2) et de la au moins une unité de déplacement (31) avec moyen de réception de charge (32) étant adaptées en tant que données d'état.

21. Système selon la revendication 1, la au moins une unité opérationnelle (4) étant reliée avec le au moins un véhicule (2) et avec la au moins une unité de déplacement (31) avec moyen de réception de charges (32) pour l'échange de données.

22. Système selon la revendication 21, l'échange de données étant assuré via des ondes électromagnétiques.
